# EUROPEAN PATENT APPLICATION

(11) **EP 4 307 796 A1**
(43) Date of publication of application: **17.01.2024**
(21) Application number: 21929554.0
(22) Date of filing: 10.03.2021
(51) Int. Cl.: H04W 72/04

(54) **TRANSMISSION CONFIGURATION INDICATION STATE CONFIGURATION METHOD AND APPARATUS, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Kudlek, Franz Thomas
(86) International application number: PCT/CN2021/080076
(87) International publication number: WO 2022/188076

(57) **Abstract**

The present disclosure relates to a transmission configuration indication state configuration method and apparatus, and a storage medium. The transmission configuration indication state configuration method comprises: acquiring transmission configuration indication state configuration information, the transmission configuration indication state configuration information comprising cell type indication information, the cell type indication information indicating a cell type corresponding to a transmission configuration indication state configured according to the transmission configuration indication state configuration information, and the cell type comprising a serving cell or a neighboring cell; and determining, according to the transmission configuration indication state configuration information, a cell corresponding to the transmission configuration indication state configured according to the transmission configuration indication state configuration information. The present disclosure achieves configuration of a transmission configuration indication state for a neighboring cell beam.

## Description

### TECHNICAL FIELD

The disclosure relates to a field of communication technology, in particular to a method for configuring a transmission configuration indication state, an apparatus for configuring a transmission configuration indication state and a storage medium.

### BACKGROUND

In a New Radio (NR) technology, for example, when a communication frequency band is in frequency range 2 (FR2), beam-based transmission and reception is required to ensure coverage due to faster attenuation of high-frequency channels.

In the related art, a network device and a terminal each use a panel for sending or receiving data. When the network device has multiple transmission reception points (TRPs) and each TRP has one or more sending panels, or when the network device has only one TRP and the TRP has multiple sending panels, the network device can use multiple panels (which can be from the same TRP or different TRPs) to send data to the same terminal simultaneously. Similarly, when the terminal also has multiple panels, the terminal can use the multiple panels to send data to the network device.

When the terminal and the network device perform beam-based data transmission, a transmission configuration indication (TCI) state of a transmitting serving cell is usually configured for the terminal, i.e., beam configuration of the serving cell is performed for the terminal. However, the data transmission between the terminal and the network device may sometimes require the terminal to be able to perform beam measurement for a neighboring cell. For example, the terminal can perform the beam-based data transmission in different cells simultaneously. For another example, dynamic beam switching requires the terminal to measure a beam performance of the neighboring cell in advance, so that a target network device can quickly use a beam with better performance to transmit data to the terminal. However, there is no method for indicating a beam of the neighboring cell.

### SUMMARY

To overcome problems in the related art, the disclosure provides a method for configuring a TCI state, an apparatus for configuring a TCI state and a storage medium.

According to a first aspect of embodiments of the disclosure, a method for configuring a TCI state is provided. The method includes:
obtaining TCI state configuration information, in which the TCI state configuration information includes cell type indication information, the cell type indication information indicates a cell type corresponding to the TCI state configured by the TCI state configuration information, and the cell type includes a serving cell or a neighboring cell; and determining a cell corresponding to the TCI state configured by the TCI state configuration information based on the TCI state configuration information.

In an implementation, the cell type indication information is represented by a flag bit.

In an implementation, the TCI state configuration information further includes at least one of a TCI state identification (ID), a serving cell index, or a reference signal ID.

In an implementation, determining the cell corresponding to the TCI state configured by the TCI state configuration information based on the TCI state configuration information, includes:
determining the cell corresponding to the TCI state configured by the TCI state configuration information based on a value of the flag bit.

In an implementation, determining the cell corresponding to the TCI state configured by the TCI state configuration information based on the value of the flag bit, includes:
in response to the value of the flag bit being a flag bit value for identifying a serving cell, determining the cell corresponding to the TCI state configured by the TCI state configuration information as the serving cell.

In an implementation, determining the cell corresponding to the TCI state configured by the TCI state configuration information based on the value of the flag bit, includes:
in response to the value of the flag bit being a flag bit value for identifying a neighboring cell, determining the cell corresponding to the TCI state configured by the TCI state configuration information as the neighboring cell.

In an implementation, the method further includes:
in response to the flag bit value for identifying the neighboring cell including a plurality of flag bit values, determining the neighboring cell corresponding to the TCI state configured by the TCI state configuration information from a plurality of neighboring cells identified by the plurality of flag bit values.

In an implementation, determining the neighboring cell corresponding to the TCI state configured by the TCI state configuration information from the plurality of neighboring cells identified by the plurality of flag bit values, includes:
determining a neighboring cell physical cell identifier (PCI) based on the serving cell index included in the TCI state configuration information; and determining a cell identified by the neighboring cell PCI as the neighboring cell corresponding to the TCI state configured by the TCI state configuration information.

In an implementation, determining the neighboring cell PCI based on the serving cell index included in the TCI state configuration information, includes:
determining the neighboring cell PCI corresponding to the serving cell index included in the TCI state configuration information based on a correspondence between the serving cell index and the neighboring cell PCI.

In an implementation, determining the neighboring cell PCI based on the serving cell index included in the TCI state configuration information, includes:
determining a component carrier in which a serving cell corresponding to the serving cell index is located, and determining the neighboring cell PCI corresponding to the component carrier.

In an implementation, in response to configuring up to one neighboring cell on the component carrier, the serving cell index and the neighboring cell PCI are in a one-to-one correspondence, and/or the component carrier and the neighboring cell PCI are in a one-to-one correspondence.

In an implementation, in response to configuring a plurality of neighboring cells on the component carrier, the serving cell index and the neighboring cell PCI are in a one-to-many correspondence, and/or the component carrier and the neighboring cell PCI are in a one-to-many correspondence.

In an implementation, the neighboring cell corresponding to the TCI state configured by the TCI state configuration information is a neighboring cell identified by the flag bit value.

According to a second aspect of the embodiments of the disclosure, a method for configuring a TCI state is provided. The method includes:
sending TCI state configuration information, in which the TCI state configuration information includes cell type indication information, the cell type indication information indicates a cell type corresponding to the TCI state configured by the TCI state configuration information, and the cell type includes a serving cell or a neighboring cell.

In an implementation, the cell type indication information is represented by a flag bit.

In an implementation, the TCI state configuration information further includes at least one of a TCI state ID, a serving cell index, or a reference signal ID.

In an implementation, a value of the flag bit includes a flag bit value for indicating a serving cell, or a flag bit value for indicating a neighboring cell.

In an implementation, the flag bit value for indicating the neighboring cell includes a plurality of flag bit values.

In an implementation, in response to configuring up to one neighboring cell on a component carrier, the serving cell index and a neighboring cell PCI are in a one-to-one correspondence, and/or the component carrier and the neighboring cell PCI are in a one-to-one correspondence.

In an implementation, in response to configuring a plurality of neighboring cells on a component carrier, the serving cell index and the neighboring cell PCI are in a one-to-many correspondence, and/or the component carrier and the neighboring cell PCI are in a one-to-many correspondence.

In an implementation, a neighboring cell corresponding to the TCI state configured by the TCI state configuration information is a neighboring cell identified by the flag bit value.

According to a third aspect of the embodiments of the disclosure, an apparatus for configuring a TCI state is provided. The apparatus includes:
a receiving unit, configured to obtain TCI state configuration information, in which the TCI state configuration information includes cell type indication information, the cell type indication information indicates a cell type corresponding to the TCI state configured by the TCI state configuration information, and the cell type includes a serving cell or a neighboring cell; and a processing unit, configured to determine a cell corresponding to the TCI state configured by the TCI state configuration information based on the TCI state configuration information.

In an implementation, the cell type indication information is represented by a flag bit.

In an implementation, the TCI state configuration information further includes at least one of a TCI state ID, a serving cell index, or a reference signal ID.

In an implementation, determining the cell corresponding to the TCI state configured by the TCI state configuration information based on the TCI state configuration information, includes:
determining the cell corresponding to the TCI state configured by the TCI state configuration information based on a value of the flag bit.

In an implementation, determining the cell corresponding to the TCI state configured by the TCI state configuration information based on the value of the flag bit, includes:
in response to the value of the flag bit being a flag bit value for identifying a serving cell, determining the cell corresponding to the TCI state configured by the TCI state configuration information as the serving cell.

In an implementation, determining the cell corresponding to the TCI state configured by the TCI state configuration information based on the value of the flag bit, includes:
in response to the value of the flag bit being a flag bit value for identifying a neighboring cell, determining the cell corresponding to the TCI state configured by the TCI state configuration information as the neighboring cell.

In an implementation, the method further includes:
in response to the flag bit value for identifying the neighboring cell including a plurality of flag bit values, determining the neighboring cell corresponding to the TCI state configured by the TCI state configuration information from a plurality of neighboring cells identified by the plurality of flag bit values.

In an implementation, determining the neighboring cell corresponding to the TCI state configured by the TCI state configuration information from the plurality of neighboring cells identified by the plurality of flag bit values, includes:
determining a neighboring cell PCI based on the serving cell index included in the TCI state configuration information; and determining a cell identified by the neighboring cell PCI as the neighboring cell corresponding to the TCI state configured by the TCI state configuration information.

In an implementation, determining the neighboring cell PCI based on the serving cell index included in the TCI state configuration information, includes:
determining the neighboring cell PCI corresponding to the serving cell index included in the TCI state configuration information based on a correspondence between the serving cell index and the neighboring cell PCI.

In an implementation, determining the neighboring cell PCI based on the serving cell index included in the TCI state configuration information, includes:
determining a component carrier in which a serving cell corresponding to the serving cell index is located, and determining the neighboring cell PCI corresponding to the component carrier.

In an implementation, in response to configuring up to one neighboring cell on the component carrier, the serving cell index and the neighboring cell PCI are in a one-to-one correspondence, and/or the component carrier and the neighboring cell PCI are in a one-to-one correspondence.

In an implementation, in response to configuring a plurality of neighboring cells on the component carrier, the serving cell index and the neighboring cell PCI are in a one-to-many correspondence, and/or the component carrier and the neighboring cell PCI are in a one-to-many correspondence.

In an implementation, the neighboring cell corresponding to the TCI state configured by the TCI state configuration information is a neighboring cell identified by the flag bit value.

According to a fourth aspect of the embodiments of the disclosure, an apparatus for configuring a TCI state is provided. The apparatus includes:
a sending unit, configured to send TCI state configuration information, in which the TCI state configuration information includes cell type indication information, the cell type indication information indicates a cell type corresponding to the TCI state configured by the TCI state configuration information, and the cell type includes a serving cell or a neighboring cell.

In an implementation, the cell type indication information is represented by a flag bit.

In an implementation, the TCI state configuration information further includes at least one of a TCI state ID, a serving cell index, or a reference signal ID.

In an implementation, a value of the flag bit includes a flag bit value for indicating a serving cell, or a flag bit value for indicating a neighboring cell.

In an implementation, the flag bit value for identifying the neighboring cell includes a plurality of flag bit values.

In an implementation, in response to configuring up to one neighboring cell on a component carrier, the serving cell index and a neighboring cell PCI are in a one-to-one correspondence, and/or the component carrier and the neighboring cell PCI are in a one-to-one correspondence.

In an implementation, in response to configuring a plurality of neighboring cells on a component carrier, the serving cell index and the neighboring cell PCI are in a one-to-many correspondence, and/or the component carrier and the neighboring cell PCI are in a one-to-many correspondence.

In an implementation, a neighboring cell corresponding to the TCI state configured by the TCI state configuration information is a neighboring cell identified by the flag bit value.

According to a fifth aspect of the embodiments of the disclosure, an apparatus for configuring a TCI state is provided. The apparatus includes:
a processor and a memory for storing instructions executable by the processor; in which
the processor is configured to implement the method for configuring a TCI state of the first aspect or any implementation of the first aspect.

According to a sixth aspect of the embodiments of the disclosure, an apparatus for configuring a TCI state is provided. The apparatus includes:
a processor and a memory for storing instructions executable by the processor; in which
the processor is configured to implement the method for configuring a TCI state of the second aspect or any implementation of the second aspect.

According to a seventh aspect of the embodiments of the disclosure, a storage medium having instructions stored thereon is provided. When the instructions are executed by a processor of a terminal, the terminal is caused to implement the method for configuring a TCI state of the first aspect or any implementation of the first aspect.

According to an eighth aspect of the embodiments of the disclosure, a storage medium having instructions stored thereon is provided. When the instructions are executed by a processor of a network device, the network device is caused to implement the method for configuring a TCI state of the second aspect or any implementation of the second aspect.

The technical solutions provided by the embodiments of the disclosure may include the following beneficial effects. The network device sends the TCI state configuration information, in which the TCI state configuration information includes the cell type indication information, the cell type indication information indicates the cell type corresponding to the TCI state configured by the TCI state configuration information, and the cell type includes the serving cell or the neighboring cell. The terminal obtains the TCI state configuration information, and determines the cell corresponding to the TCI state configured by the TCI state configuration information based on the TCI state configuration information. The disclosure realizes the configuration of the TCI state of a beam of the neighboring cell.

It should be understood that the above general description and the following detailed descriptions are exemplary and explanatory only and do not limit the disclosure.

### BRIEF DESCRIPTION OF THE DRAWINGS

The accompanying drawings, which are incorporated in and constitute a part of this specification, illustrate embodiments consistent with the disclosure and together with the description serve to explain the principles of the disclosure.
FIG. 1 is a schematic diagram of a wireless communication system according to an exemplary embodiment.
FIG. 2 is a flowchart of a method for configuring a TCI state according to an exemplary embodiment.
FIG. 3 is a flowchart of a method for configuring a TCI state according to an exemplary embodiment.
FIG. 4 is a flowchart of a method for configuring a TCI state according to an exemplary embodiment.
FIG. 5 is a flowchart of a method for configuring a TCI state according to an exemplary embodiment.
FIG. 6 is a flowchart of a method for configuring a TCI state according to an exemplary embodiment.
FIG. 7 is a flowchart of a method for configuring a TCI state according to an exemplary embodiment.
FIG. 8 is a flowchart of a method for configuring a TCI state according to an exemplary embodiment.
FIG. 9 is a block diagram of an apparatus for configuring a TCI state according to an exemplary embodiment.
FIG. 10 is a block diagram of an apparatus for configuring a TCI state according to an exemplary embodiment.
FIG. 11 is a block diagram of an apparatus for configuring a TCI state according to an exemplary embodiment.
FIG. 12 is a block diagram of an apparatus for configuring a TCI state according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

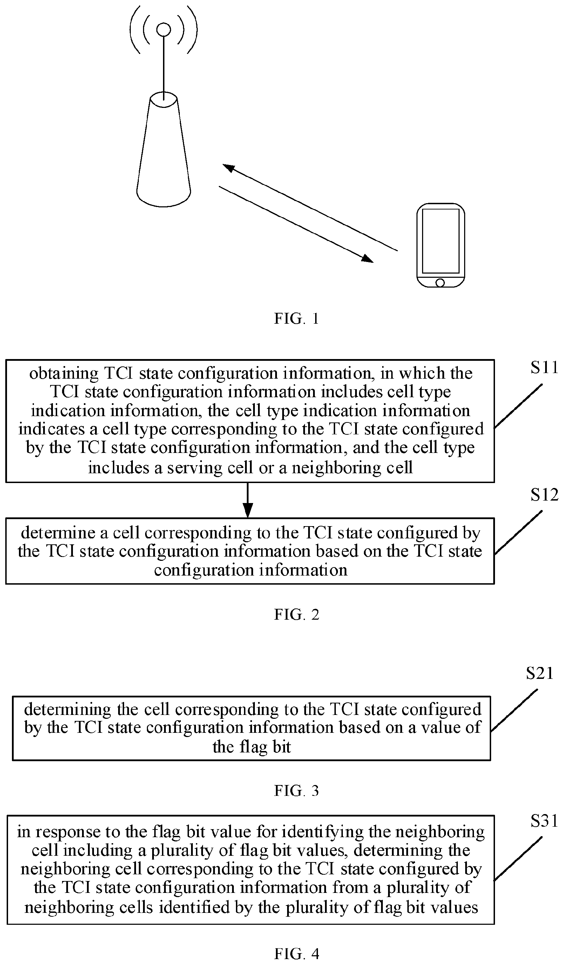

The method for configuring a TCI state provided by the embodiments of the disclosure may be applied in a wireless communication system shown in FIG. 1. As illustrated in FIG. 1, the wireless communication system includes a terminal and a network device. The terminal is connected to the network device via radio resources for transmitting and receiving data.

It is understood that the wireless communication system shown in FIG. 1 is only for schematic illustration, and other network devices may be included in the wireless communication system, such as a core network device, a wireless relay device and a wireless backhaul device, which are not shown in FIG. 1. The number of network devices and the number of terminals included in the wireless communication system are not limited in the embodiments of the disclosure.

It is further understood that the wireless communication system of the embodiments of the disclosure is a network that provides a wireless communication function. The wireless communication system may employ different communication technologies, such as code division multiple access (CDMA), wideband code division multiple access (WCDMA), time division multiple access (TDMA), frequency division multiple access (FDMA), orthogonal frequency-division multiple access (OFDMA), single carrier FDMA (SC-FDMA), and carrier sense multiple access/collision avoidance. Depending on factors such as capacity, rate, and delay of different networks, the network can be classified as a second Generation (2G) network, a 3G network, a 4G network, or a future evolved network, such as a 5G network, which can also be called NR network. For easy of description, in this disclosure, the wireless communication network is sometimes simply referred to as network.

The network device involved in the disclosure may also be referred to as radio access network device. The radio access network device may be: a base station, an evolved base station (evolved node B, i.e., eNB), a femtocell, an access point (AP), a wireless relay node, a wireless backhaul node, a transmission point (TP) or a TRP in a wireless fidelity (WIFI) system, a gNB in a NR system, or components or a part of the devices that constitute the base station. The network device may also be a vehicle-mounted device in a vehicle to everything (V2X) communication system. It should be understood that the specific technology and the specific device form used by the network device are not limited in the embodiments of the disclosure.

The terminal involved in the disclosure may also be referred to as terminal device, user equipment (UE), mobile station (MS), or mobile terminal (MT), which is a device that provides voice and/or data connectivity to a user. For example, the terminal can be a handheld device or a vehicle-mounted device with a wireless connectivity function. For example, the existing terminals include a mobile phone, a pocket personal computer (PPC), a handheld computer, a personal digital assistant (PDA), a laptop, a tablet computer, a wearable device, or a vehicle-mounted device, etc. In addition, the terminal device may also be a vehicle-mounted device in the V2X communication system. It should be understood that the specific technology and the specific device form adopted by the terminal are not limited in the embodiments of the disclosure.

Beam-based data transmission between the network device and the terminal is provided in the disclosure. In the related art, during the beam-based data transmission between the network device and the terminal, a TCI state of a transmitting serving cell is usually configured for the terminal. The TCI state is configured to indicate a spatial relation, such as a QCL (Quasi co-location, or Quasi co-located) relation between a physical downlink control channel (PDCCH) or another channel or a reference signal and a reference signal indicated by the TCI state. A beam is indicated by the TCI state. There is a correspondence between the TCI state and the beam, and the beam and the TCI state are sometimes used interchangeably in the disclosure, while the beam corresponds to QCL information of type D in the TCI state, the meaning of which should be understood by those skilled in the art.

In a TCI state configuration of the serving cell, the TCI state includes a serving cell index and a reference signal ID (RS ID). The serving cell index indicates indexes of multiple serving cells of the terminal, such as, an index corresponding to a Primary Cell (PCell) may be #0, and indexes corresponding to other Secondary Cells (SCells) may be #1, #2 ........, and so on. Each index corresponds to a physical cell ID (PCI) of a serving cell. The correspondence between a PCI of the PCell and the index #0 is fixed. For other SCells, the correspondence between the index of the SCell and the PCI is given when configuring the SCell.

During the beam-based data transmission, the network device (e.g., base station) may use multiple panels to send data to the same terminal. The terminal may also use multiple panels to send data to the network device.

In an example, assuming that panel#1 and panel#2 are used to transmit data between the network device and the terminal, when the terminal moves to an edge of a cell, the performance of the serving cell is better when it is measured at panel# 1, and the performance of the neighboring cell is better when it is measured at panel#2. In this case, the throughput is not optimal whether the terminal remains in the serving cell or is switched to the neighboring cell, because the terminal may be at a location where the coverage of the serving cell and that of the neighboring cell are overlapped, and it is possible that the performance of the serving cell and the performance of the neighboring cell may vary alternatively. In this case, it is optimal beam-based data transmission for the terminal is performed in different cells at the same time, which requires the terminal to be able to perform beam measurement for the neighboring cell. In addition, even if the terminal needs to be switched to the neighboring cell, in order to achieve fast switching, the terminal needs to measure the beam performance of the neighboring cell in advance, so that the target network device can quickly transmit data to the terminal using a beam with better performance. However, there is no method for configuring a TCI state for the neighboring cell.

In the embodiment of the disclosure, a method for configuring a TCI state is provided. In the method for configuring a TCI state, configuration information indicates whether a cell corresponding to the TCI state configured by the configuration information is a serving cell or a neighboring cell, to realize configuration of the TCI state of the neighboring cell. The neighboring cell is known as non-serving cell.

FIG. 2 is a flowchart of a method for configuring a TCI state according to an exemplary embodiment. As illustrated in FIG. 2, the method includes the following steps.

At step S 11, TCI state configuration information is obtained.

The TCI state configuration information includes cell type indication information. The cell type indication information indicates a cell type corresponding to the TCI state configured by the TCI state configuration information, and the cell type includes a serving cell or a neighboring cell.

At step S12, a cell corresponding to the TCI state configured by the TCI state configuration information is determined based on the TCI state configuration information.

It is understood that the cell type indication information in the embodiment of the disclosure is only a functional name used to indicate whether the cell corresponding to the TCI state configured by the TCI state configuration information is a serving cell or a neighboring cell, and the specific name is not limited in the embodiments of the disclosure.

In the method for configuring a TCI state provided by the embodiment of the disclosure, the cell type indication information is represented by a flag bit, i.e., the TCI state configuration information includes a flag bit used to distinguish the serving cell from the neighboring cell. Different flag bits can be used to identify the serving cell and the neighboring cell, which may be different bits or different values of a same bit.

Further, the flag bit used to distinguish between the serving cell and the neighboring cell in the embodiment of the disclosure may have different values. Different values of the flag bit can be used to distinguish between the serving cell and the neighboring cell.

FIG. 3 is a flowchart of a method for configuring a TCI state according to an exemplary embodiment. As illustrated in FIG. 3, the method includes the following steps.

At step S21, the cell corresponding to the TCI state configured by the TCI state configuration information is determined based on a value of the flag bit.

In the method for configuring a TCI state provided by the embodiment of the disclosure, in response to the value of the flag bit being a flag bit value for identifying a serving cell, it is determined that the cell corresponding to the TCI state configured by the TCI state configuration information is a serving cell. In response to the value of the flag bit being a flag bit value for identifying a neighboring cell, it is determined that the cell corresponding to the TCI state configured by the TCI state configuration information is a neighboring cell.

In an example, the flag bit used to identify the serving cell or the neighboring cell occupies 1 bit. If the value of the flag bit is 0, it indicates that the cell corresponding to the TCI state configured by the TCI state configuration information is a serving cell. If the value of the flag bit is 1, it indicates that the cell corresponding to the TCI state configured by the TCI state configuration information is a neighboring cell. Or, it may also be that if the value of the flag bit is 0, it indicates that the cell corresponding to the TCI state configured by the TCI state configuration information is a neighboring cell. If the value of the flag bit is 1, it indicates that the cell corresponding to the TCI state configured by the TCI state configuration information is a serving cell.

It is understood that in the embodiments of the disclosure, the flag bit used to identify the serving cell or the neighboring cell may occupy multiple bits. The values of the multiple bits are used to distinguish the serving cell and multiple different neighboring cells, respectively. For example, the flag bit may occupy 2 bits, if the value of the flag bit is 00, it indicates a serving cell. If the value of the flag bit is 01, 10 or 11, it indicates different neighboring cells.

In the method for configuring a TCI state provided by the embodiment of the disclosure, in response to the flag bit value for identifying the neighboring cell including a plurality of flag bit values, the plurality of flag bit values may be used to identify multiple neighboring cells. In response to the flag bit value for identifying the neighboring cell including a plurality of flag bit values, the neighboring cell corresponding to the TCI state configured by the TCI state configuration information may be determined from the plurality of neighboring cells identified by the plurality of flag bit values.

FIG. 4 is a flowchart of a method for configuring a TCI state according to an exemplary embodiment. As illustrated in FIG. 4, the method includes the following steps.

At step S31, in response to the flag bit value for identifying the neighboring cell including a plurality of flag bit values, the neighboring cell corresponding to the TCI state configured by the TCI state configuration information is determined from a plurality of neighboring cells identified by the plurality of flag bit values.

In the method for configuring a TCI state provided by the embodiment of the disclosure, in addition to the flag bit, the TCI state configuration information may further include at least one of a TCI state ID, a serving cell index, or a RS ID.

In an embodiment, in the method for configuring a TCI state provided by the embodiment of the disclosure, the TCI state configuration information may include a TCI state ID, a serving cell index, a RS ID, and a flag bit for distinguishing the serving cell from the neighboring cell. In other words, in the method for configuring a TCI state provided by the embodiment of the disclosure, the TCI state configuration information may be a flag bit for distinguishing the serving cell from the neighboring cell added on the basis of the TCI state configuration information for performing beam configuration for the serving cell alone in the conventional technology.

In the embodiment of the disclosure, the serving cell index included in the TCI state configuration information may be reused to determine the neighboring cell corresponding to the TCI state configured by the TCI state configuration information from the plurality of neighboring cells.

In the method for configuring a TCI state provided by the embodiment of the disclosure, the TCI state configuration information includes the serving cell index, the neighboring cell PCI (i.e., the PCI of the neighboring cell) is determined based on the serving cell index, and the neighboring cell corresponding to the TCI state configured by the TCI state configuration information can be further determined.

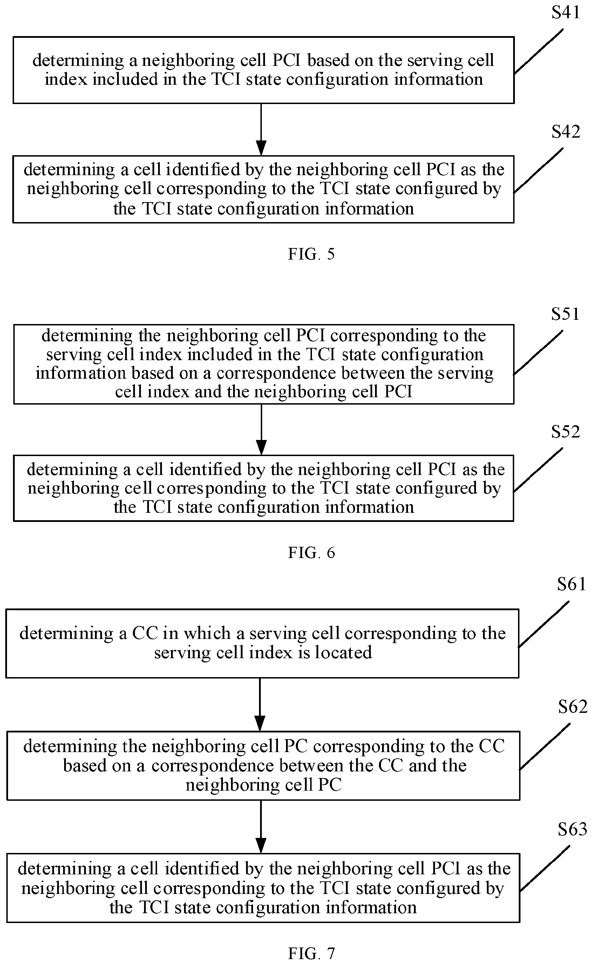

FIG. 5 is a flowchart of a method for configuring a TCI state according to an exemplary embodiment. As illustrated in FIG. 5, the method includes the following steps.

At step S41, a neighboring cell PCI is determined based on the serving cell index included in the TCI state configuration information.

At step S42, a cell identified by the neighboring cell PCI is determined as the neighboring cell corresponding to the TCI state configured by the TCI state configuration information.

In the method for configuring a TCI state provided by the embodiment of the disclosure, the TCI state configuration information includes the serving cell index, a correspondence between the serving cell index and the neighboring cell is determined, and further based on the serving cell index included in the TCI state configuration information. The correspondence between the serving cell index and the neighboring cell may be understood to be a correspondence between the serving cell index and the neighboring cell PCI.

The correspondence between the serving cell index and the neighboring cell PCI can be configured explicitly or implicitly. For example, the correspondence between the serving cell index and the neighboring cell PCI can be configured through a radio resource control (RRC) signaling.

In the embodiment of the disclosure, when determining the neighboring cell corresponding to the TCI state configured by the TCI state configuration information from the plurality of neighboring cells identified by the plurality of flag bit values, after determining the serving cell index included in the TCI state configuration information, the neighboring cell PCI corresponding to the TCI state configured by the TCI state configuration information is determined based on the correspondence between the serving cell index and the neighboring cell PCI. The cell identified by the neighboring cell PCI is determined as the neighboring cell corresponding to the TCI state configured by the TCI state configuration information.

FIG. 6 is a flowchart of a method for configuring a TCI state according to an exemplary embodiment. As illustrated in FIG. 6, the method includes the following steps.

At step S51, the neighboring cell PCI corresponding to the serving cell index included in the TCI state configuration information is determined based on a correspondence between the serving cell index and the neighboring cell PCI.

At step S52, a cell identified by the neighboring cell PCI is determined as the neighboring cell corresponding to the TCI state configured by the TCI state configuration information.

In another method for configuring a TCI state provided by the embodiment of the disclosure, the TCI state configuration information includes the serving cell index, and there is a correspondence between the serving cell index and a component carrier (CC).

In the embodiment of the disclosure, when determining the neighboring cell corresponding to the TCI state configured by the TCI state configuration information from the plurality of neighboring cells identified by the plurality of flag bit values, after determining the serving cell index included in the TCI state configuration information, the neighboring cell PCI corresponding to the TCI state configured by the TCI state configuration information is determined based on the correspondence between the serving cell index and the CC. The cell identified by the neighboring cell PCI is determined as the neighboring cell corresponding to the TCI state configured by the TCI state configuration information.

FIG. 7 is a flowchart of a method for configuring a TCI state according to an exemplary embodiment. As illustrated in FIG. 7, the method includes the following steps.

At step S61, a CC in which a serving cell corresponding to the serving cell index is located is determined.

At step S62, a neighboring cell PC corresponding to the CC is determined based on a correspondence between the CC and the neighboring cell PC.

At step S63, a cell identified by the neighboring cell PCI is determined as the neighboring cell corresponding to the TCI state configured by the TCI state configuration information.

In the method for configuring a TCI state provided by the embodiment of the disclosure, the serving cell index is reused to divide one or more neighboring cells that are on the same CC with the serving cell into groups, and the one or more neighboring cells on the same CC can be indicated by the same serving cell index.

In the embodiment of the disclosure, a correspondence among the serving cell index, the CC, and one or more neighboring cell PCIs may be established. In an implementation, a correspondence between the serving cell index and the CC, a correspondence between the CC and the neighboring cell PCI, and a correspondence between a neighboring cell index and the neighboring cell PCI are provided. After determining the serving cell, the CC where the serving cell is located can be determined, the neighboring cell PCI can be determined based on the correspondence between the CC and the neighboring cell PCI, and the neighboring cell index can be further determined to obtain the neighboring cell corresponding to the TCI state configured by the TCI state configuration information.

In the embodiment of the disclosure, one or more neighboring cells can be configured on the CC.

In an implementation, in response to configuring up to one neighboring cell on the CC, the serving cell index and the neighboring cell PCI are in a one-to-one correspondence, and/or the CC and the neighboring cell PCI are in a one-to-one correspondence.

In an implementation, in response to configuring up to one neighboring cell on the CC, the flag bit included in the TCI state configuration information may occupy 1 bit, and different bit values are used to distinguish the serving cell from the neighboring cell. For example, if the value of the flag bit is 0, it indicates a serving cell, and it can be understood that the TCI state configured by the TCI state configuration information corresponds to the RS ID of the serving cell. If the value of the flag bit is 1, it indicates a neighboring cell, and it can be understood that the TCI state configured by the TCI state configuration information corresponds to the RS ID of the neighboring cell.

In the embodiment of the disclosure, the TCI state configuration information includes the serving cell index, and it is configured explicitly or implicitly that the neighboring cell corresponds to the serving cell index. For example, the correspondence between the serving cell index and the neighboring cell PCI can be indicated via a RRC signaling. For example, the serving cell index corresponding to the neighboring cell whose PCI is 32 may be #1. For another example, the serving cell index corresponding to the neighboring cell whose PCI is 73 may be #2...

Further, since each CC is configured with up to one neighboring cell, for each serving cell, only one neighboring cell and the serving cell are on the same CC, so that the terminal obtains the CC corresponding to the serving cell according to the serving cell index, and obtains, according to the one-to-one correspondence between the neighboring cell PCI and the CC, PCI information of the neighboring cell on the CC. For example, the terminal knows that the serving cell #0 corresponds to CC1 and the serving cell #1 corresponds to CC2, and the terminal knows that the neighboring cell whose PCI is 32 corresponds to the CC1 and the neighboring cell whose PCI is 73 corresponds to the CC2, when the terminal receives the TCI state configuration information that contains the service cell ID #1 with the flag bit with value of 1, the terminal finds the CC2 according to the serving cell ID #1, and then finds the neighboring cell whose PCI is 73 according to the CC2, and it can learns that the TCI state configuration information includes the beam corresponding to the RS of the neighboring cell whose PCI is 73.

In an implementation, in response to configuring a plurality of neighboring cells on the CC, the serving cell index and the neighboring cell PCI are in a one-to-many correspondence, and/or the CC and the neighboring cell PCI are in a one-to-many correspondence.

In the embodiment of the disclosure, in response to configuring a plurality of neighboring cells on each CC, a flag bit value that can indicate the plurality of neighboring cells can be set. For example, when up to 3 neighboring cells can be configured on each CC, the neighboring cell and the serving cell can be distinguished by the flag bit that occupies 2 bits. For example, if the flag bit is 00, it indicates a serving cell, it may be understood that the TCI state configured by the TCI state configuration information corresponds to the RS ID of the serving cell. If the flag bit is 01, 10 or 11, it indicates a different neighboring cell, it may be further understood that the TCI state configured by the TCI state configuration information corresponds to the RS ID of the neighboring cell.

In the method for configuring a TCI state provided by the embodiment of the disclosure, since the TCI state configuration information includes the serving cell index, similar to the method for configuring up to one neighboring cell on the CC, the correspondence between the neighboring cell PCI and the serving cell index needs to be determined.

In an implementation, an explicit configuration mode is used to configure the one-to-many correspondence between the serving cell index and the neighboring cell PCI. For example, the RRC signaling indicates the correspondence between the neighboring cell PCI and the serving cell index. For example, the neighboring cell whose PCI is 32, the neighboring cell whose PCI is 33, and the neighboring cell whose PCI is 34 all correspond to the serving cell index #1. For another example, the neighboring cell whose PCI is 73, the neighboring cell whose PCI is 74, and the neighboring cell whose PCI is 75 all correspond to the serving cell index #2, and so on.

In the embodiment of the disclosure, based on the one-to-many correspondence among the serving cell index and/or the CC and the neighboring cell PCI, a plurality of neighboring cell PCIs can be determined, and the neighboring cell identified by the flag bit value in the TCI state configuration information can be determined as the neighboring cell corresponding to the TCI state configured by the TCI state configuration information.

If a plurality of flag bit values in the TCI state configuration information identify a plurality of neighboring cells, the neighboring cell can be further determined from the plurality of neighboring cells identified by the plurality of flag bit values. In the embodiment of the disclosure, an explicit configuration mode or an implicit configuration mode can be used to configure the specific neighboring cell identified by the flag bit value.

### 1. Explicit configuration

The network device sends a RRC signaling to indicate the correspondence among the serving cell index, the flag bit value and the neighboring cell PCI. For example, for the serving cell ID #1, the flag bit 01 identifies the neighboring cell PCI 32, the flag bit 10 identifies the neighboring cell PCI 33, and the flag bit 11 identifies the neighboring cell PCI 34. For another example, for the serving cell ID #2, the flag bit 01 identifies the neighboring cell PCI 73, the flag bit 10 identifies the neighboring cell PCI 74, and the flag bit 11 identifies the neighboring cell PCI 75. Alternatively, the RRC signaling indicates that there is a one-to-one correspondence between the flag bits 01, 10 and 11 and PCIs of three neighboring cells on the CC, which are sorted based on the PCIs in a descending order or in an ascending order to have a one-to-one correspondence to 3 codepoints of the flag bits. That is, the flag bit 01 corresponds to the neighboring cell with the smallest PCI, the flag bit 10 corresponds to the neighboring cell with the middle PCI, and the flag bit 11 corresponds to the neighboring cell with the largest PCI. Alternatively, the flag bit 01 corresponds to the neighboring cell with the largest PCI, the flag bit 10 corresponds to the neighboring cell with the middle PCI, and the flag bit 11 corresponds to the neighboring cell with the smallest PCI.

### 2. Implicit configuration

By default, the PCIs are sorted in a descending order or in an ascending order, to have a one-to-one correspondence to 3 codepoints of the flag bits. That is, the flag bit 01 corresponds to the neighboring cell with the smallest PCI, the flag bit 10 corresponds to the neighboring cell with the middle PCI, and the flag bit 11 corresponds to the neighboring cell with the largest PCI. Alternatively, the flag bit 01 corresponds to the neighboring cell with the largest PCI, the flag bit 10 corresponds to the neighboring cell with the middle PCI, and the flag bit 11 corresponds to the neighboring cell with the smallest PCI.

Further, in the embodiments of the disclosure, since up to one neighboring cell is configured on the CC, for each serving cell, the terminal obtains the CC corresponding to the serving cell based on the serving cell index, and then obtains PCI information of the neighboring cell on the CC based on the CC. For example, the terminal knows that the serving cell #0 corresponds to CC1 and the serving cell #1 corresponds to CC2, and the terminal knows that three neighboring cells whose PCIs are 32, 33, and 34 correspond to CC1, and three neighboring cells whose PCIs are 73, 74, and 75 correspond to CC2, when the terminal receives the TCI state configuration information that contains the serving cell ID #1 and the flag bit is not 00, the terminal finds the CC2 based on the service cell ID#1, and finds the neighboring cells whose PCIs are 73, 74, 75 based on the CC2, and then learns that the beam configuration contains the beam corresponding to the RS of the neighboring cell whose PCI is 73, 74 or 75 based on the default one-to-one correspondence between the codepoints which are 01, 10, and 11 and the PCIs which are 73, 74 and 75. The default correspondence may be the same as described above, i.e., the PCIs are sorted in a descending order or in an ascending order, to correspond one-to-one to the codepoints 01, 10, 11.

In the method for configuring a TCI state provided by the embodiment of the disclosure, a beam configuration signaling is designed by dividing the neighboring cells located on the same CC with the serving cell into groups and using the serving cell ID as group identification information, thereby reducing a signaling overhead for neighboring cell beam configuration.

The method for configuring a TCI state provided by the above embodiments of the disclosure can be executed by the terminal.

Based on the same concept, the embodiments of the disclosure also provide a method for configuring a TCI state that can be applied to a network device.

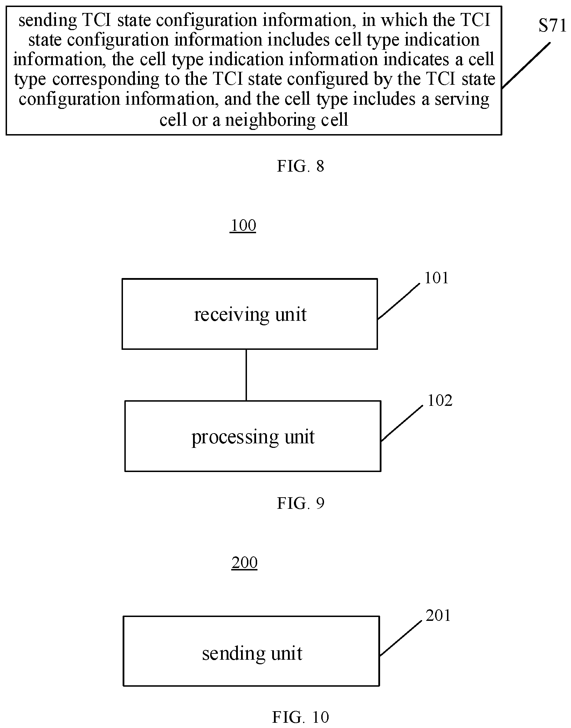

FIG. 8 is a flowchart of a method for configuring a TCI state according to an exemplary embodiment. As illustrated in FIG. 8, the method includes the following steps.

At step S71, TCI state configuration information is sent, in which the TCI state configuration information includes cell type indication information, the cell type indication information indicates a cell type corresponding to the TCI state configured by the TCI state configuration information, and the cell type includes a serving cell or a neighboring cell.

In an implementation, in the method for configuring a TCI state provided by the embodiment of the disclosure, the cell type indication information is represented by a flag bit. That is, the TCI state configuration information includes a flag bit, and the flag bit is configured to identify a serving cell or a neighboring cell.

Different flag bits can be different bits or different values of the same bit.

Further, the TCI state configuration information further includes at least one of a TCI state ID, a serving cell index, or a RS ID.

Further, the flag bit used to distinguish between the serving cell and the neighboring cell in the embodiment of the disclosure may have different values. Different flag bit values can be used to distinguish between the serving cell and the neighboring cell.

In an implementation, a value of the flag bit includes a flag bit value for indicating a serving cell, or a flag bit value for indicating a neighboring cell.

In an implementation, the flag bit value for identifying the neighboring cell includes a plurality of flag bit values.

In an implementation, in response to configuring up to one neighboring cell on a CC, the serving cell index and a neighboring cell PCI are in a one-to-one correspondence, and/or the CC and the neighboring cell PCI are in a one-to-one correspondence.

In an implementation, in response to configuring a plurality of neighboring cells on the CC, the serving cell index and the neighboring cell PCI are in a one-to-many correspondence, and/or the CC and the neighboring cell PCI are in a one-to-many correspondence.

In an implementation, a neighboring cell corresponding to the TCI state configured by the TCI state configuration information is a neighboring cell identified by the flag bit value.

In the embodiment of the disclosure, in an implementation, an explicit configuration mode is used to configure the correspondence between the serving cell index and the neighboring cell PCI. For example, the RRC signaling indicates the correspondence between the neighboring cell PCI and the serving cell index.

It may be understood that the method for configuring a TCI state applied to a network device provided by the embodiment of the disclosure is similar to the method for configuring a TCI state performed by the terminal, and the similarities will not be repeated herein.

It is further understood that the method for configuring a TCI state provided by the embodiments of the disclosure can be applied to an implementation process in which the terminal interacts with the network device to configure the TCI state. In the method in which the terminal interacts with the network device to configure a TCI state, the terminal and the network device are each equipped with relevant functions for implementing the above embodiments, which will not be repeated herein.

It is noted that those skilled in the art understand that various embodiments/examples involved above in the embodiments of the disclosure can be used in combination with the foregoing embodiments or can be used independently. Whether they are used alone or in combination with the foregoing embodiments, the implementation principles are similar. Some of the embodiments of the disclosure are illustrated as implementations that are used together. Certainly, those skilled in the art understand that such illustrative description is not a limitation of the embodiments of the disclosure.

Based on the same concept, the embodiments of the disclosure also provide an apparatus for configuring a TCI state.

It may be understood that the apparatus for configuring a TCI state provided by the embodiments of the disclosure includes hardware structures and/or software modules that perform respective functions to achieve the above functions. In combination with units and algorithmic steps of the various examples disclosed in the embodiments of the disclosure, the embodiments of the disclosure can be implemented in the form of hardware or a combination of hardware and computer software. Whether a particular function is performed by hardware or by a way of driving hardware by computer software depends on the particular application and design constraints of the technical solutions. Those skilled in the art may use different methods for each particular application to implement the described functions, but such implementation should not be considered as beyond the scope of the technical solutions of the embodiments of the disclosure.

FIG. 9 is a block diagram of an apparatus for configuring a TCI state according to an exemplary embodiment. As illustrated in FIG. 9, the apparatus 100 for configuring a TCI state includes: a receiving unit 101 and a processing unit 102.

The receiving unit 101 is configured to obtain TCI state configuration information, in which the TCI state configuration information includes cell type indication information, the cell type indication information indicates a cell type corresponding to the TCI state configured by the TCI state configuration information, and the cell type includes a serving cell or a neighboring cell. The processing unit 102 is configured to determine a cell corresponding to the TCI state configured by the TCI state configuration information based on the TCI state configuration information.

In an implementation, the cell type indication information is represented by a flag bit. That is, the TCI state configuration information includes a flag bit, and the flag bit is configured to identify a serving cell or a neighboring cell.

In an implementation, the TCI state configuration information further includes at least one of a TCI state ID, a serving cell index, or a RS ID.

In an implementation, the processing unit 102 is configured to determine the cell corresponding to the TCI state configured by the TCI state configuration information based on a value of the flag bit.

In an implementation, the processing unit 102 is configured to, in response to the value of the flag bit being a flag bit value for identifying a serving cell, determine the cell corresponding to the TCI state configured by the TCI state configuration information as a serving cell.

In an implementation, the processing unit 102 is configured to, in response to the value of the flag bit being a flag bit value for identifying a neighboring cell, determine the cell corresponding to the TCI state configured by the TCI state configuration information as a neighboring cell.

In an implementation, the processing unit 102 is configured to, in response to the flag bit value for identifying the neighboring cell including a plurality of flag bit values, determine the neighboring cell corresponding to the TCI state configured by the TCI state configuration information from a plurality of neighboring cells identified by the plurality of flag bit values.

In an implementation, the processing unit 102 is configured to, determine a neighboring cell PCI based on the serving cell index included in the TCI state configuration information, and determine a cell identified by the neighboring cell PCI as the neighboring cell corresponding to the TCI state configured by the TCI state configuration information.

In an implementation, the processing unit 102 is configured to determine the neighboring cell PCI corresponding to the serving cell index included in the TCI state configuration information based on a correspondence between the serving cell index and the neighboring cell PCI.

In an implementation, the processing unit 102 is configured to determine a component carrier in which a serving cell corresponding to the serving cell index is located, and determine the neighboring cell PCI corresponding to the component carrier.

In an implementation, in response to configuring up to one neighboring cell on the component carrier, the serving cell index and the neighboring cell PCI are in a one-to-one correspondence, and/or the component carrier and the neighboring cell PCI are in a one-to-one correspondence.

In an implementation, in response to configuring a plurality of neighboring cells on the component carrier, the serving cell index and the neighboring cell PCI are in a one-to-many correspondence, and/or the component carrier and the neighboring cell PCI are in a one-to-many correspondence.

In an implementation, the neighboring cell corresponding to the TCI state configured by the TCI state configuration information is a neighboring cell identified by the flag bit value.

FIG. 10 is a block diagram of an apparatus 200 for configuring a TCI state according to an exemplary embodiment. As illustrated in FIG. 10, the apparatus 200 for configuring a TCI state includes: a sending unit 201.

The sending unit 201 is configured to send TCI state configuration information, in which the TCI state configuration information includes cell type indication information, the cell type indication information indicates a cell type corresponding to the TCI state configured by the TCI state configuration information, and the cell type includes a serving cell or a neighboring cell.

In an implementation, the cell type indication information is represented by a flag bit. That is, the TCI state configuration information includes a flag bit, and the flag bit is configured to identify a serving cell or a neighboring cell.

In an implementation, the TCI state configuration information further includes at least one of a TCI state ID, a serving cell index, or a RS ID.

In an implementation, a value of the flag bit includes a flag bit value for indicating a serving cell, or a flag bit value for indicating a neighboring cell.

In an implementation, the flag bit value for identifying the neighboring cell includes a plurality of flag bit values.

In an implementation, in response to configuring up to one neighboring cell on a component carrier, the serving cell index and a neighboring cell PCI are in a one-to-one correspondence, and/or the component carrier and the neighboring cell PCI are in a one-to-one correspondence.

In an implementation, in response to configuring a plurality of neighboring cells on a component carrier, the serving cell index and the neighboring cell PCI are in a one-to-many correspondence, and/or the component carrier and the neighboring cell PCI are in a one-to-many correspondence.

In an implementation, a neighboring cell corresponding to the TCI state configured by the TCI state configuration information is a neighboring cell identified by the flag bit value.

Regarding the apparatuses in the above embodiments, the specific way in which each module performs its operation has been described in detail in the method embodiments, and will not be described in detail here.

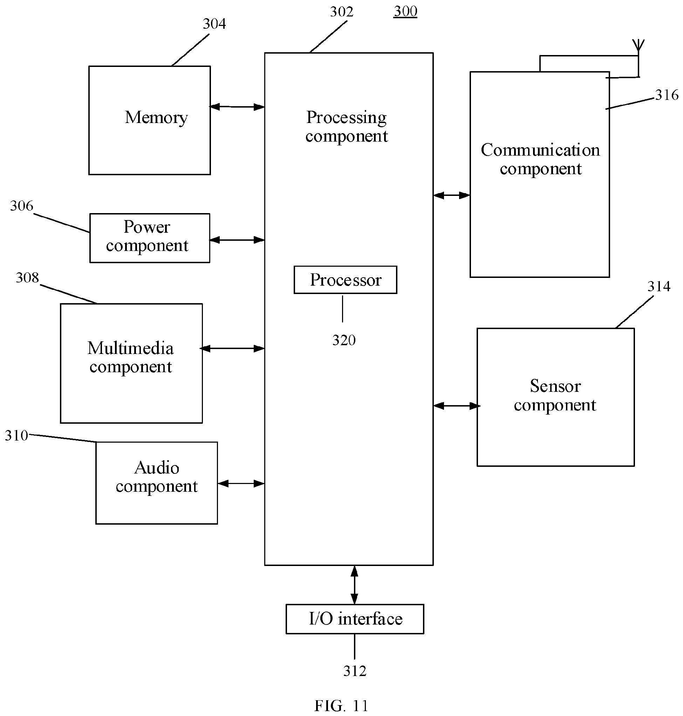

FIG. 11 is a block diagram of an apparatus 300 for configuring a TCI state according to an exemplary embodiment. For example, the apparatus 300 may be a mobile phone, a computer, a digital broadcasting terminal, a message transceiver device, a game console, a tablet device, a medical device, a fitness device and a PDA.

As illustrated in FIG. 11, the apparatus 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the apparatus 300, such as the operations associated with display, telephone call, data communication, camera operation, and recording operation. The processing component 302 may include one or more processors 320 to perform instructions to implement all or part of the steps in the above described methods. Moreover, the processing component 302 may include one or more modules which facilitate the interaction between the processing component 302 and other components. For example, the processing component 302 may include a multimedia module to facilitate the interaction between the multimedia component 308 and the processing component 302.

The memory 304 is configured to store various types of data to support the operation of the apparatus 300. Examples of such data include instructions for any applications or methods operated on the apparatus 300, contact data, phonebook data, messages, pictures, videos, etc. The memory 304 may be implemented using any type of volatile or non-volatile memory devices, or a combination thereof, such as a static random-access memory (SRAM), an electrically-erasable programmable read only memory (EEPROM), an erasable programmable read only memory (EPROM), a programmable read-only memory (PROM), a read only memory (ROM), a magnetic memory, a flash memory, a magnetic or optical disk.

The power component 306 provides power to various components of the apparatus 300. The power component 306 may include a power management system, one or more power sources, and any other components associated with the generation, management, and distribution of power in the apparatus 300.

The multimedia component 308 includes a screen providing an output interface between the device apparatus and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 308 includes a front-facing camera and/or a rear-facing camera. When the apparatus 300 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 310 is configured to output and/or input audio signals. For example, the audio component 310 includes a microphone (MIC) configured to receive an external audio signal when the apparatus 300 is in an operation mode, such as a calling mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, buttons, and the like. The buttons may include, but are not limited to, a home button, a volume button, a starting button, and a locking button.

The sensor component 314 includes one or more sensors to provide status assessments of various aspects of the apparatus 300. For instance, the sensor component 314 may detect an open/closed status of the apparatus 300, relative positioning of components, e.g., the display and the keypad, of the apparatus 300, a change in position of the apparatus 300 or a component of the apparatus 300, a presence or absence of a user contact with the apparatus 300, an orientation or an acceleration/deceleration of the apparatus 300, and a change in temperature of the apparatus 300. The sensor component 314 may include a proximity sensor configured to detect the presence of nearby objects without any physical contact. The sensor component 314 may also include a light sensor, such as a Complementary Metal Oxide Semiconductor (CMOS) or Charge-Coupled Device (CCD) image sensor, for use in imaging applications. In some embodiments, the sensor component 314 may also include an accelerometer sensor, a gyroscope sensor, a magnetic sensor, a pressure sensor, or a temperature sensor.

The communication component 316 is configured to facilitate communication, wired or wirelessly, between the apparatus 300 and other devices. The apparatus 300 can access a wireless network based on a communication standard, such as WiFi, 2G, or 3G, or a combination thereof. In an exemplary embodiment, the communication component 316 receives a broadcast signal from an external broadcast management system or broadcast associated information via a broadcast channel. In an exemplary embodiment, the communication component 316 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the apparatus 300 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In the exemplary embodiments, there is also provided a non-transitory computer readable storage medium including instructions, such as the memory 304, executable by the processor 320 in the apparatus 300, for implementing the above methods. For example, the non-transitory computer-readable storage medium may be a ROM, a Random Access Memory (RAM), a CD-ROM, a magnetic tape, a floppy disc, and an optical data storage device.

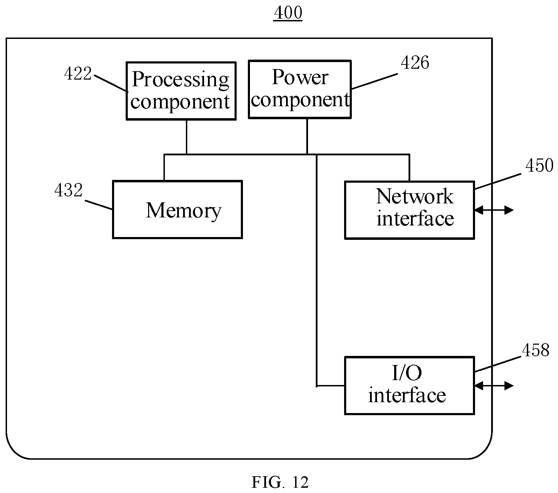

FIG. 12 is a block diagram of an apparatus 400 for configuring a TCI state according to an exemplary embodiment. For example, the apparatus 400 may be provided as a network device. As illustrated in FIG. 15, the apparatus 400 includes a processing component 422 including one or more processors, and memory resources represented by a memory 432 for storing instructions that can be executed by the processing component 422, such as applications. The application programs stored in the memory 432 may include one or more modules each corresponding to a set of instructions. In addition, the processing component 422 is configured to execute the instructions to perform the methods described above.

The apparatus 400 may also include a power component 426 configured to perform power management of the apparatus 400, a wired or wireless network interface 450 configured to connect the apparatus 400 to a network, and an I/O interface 458. The apparatus 400 may operate on an operating system stored in the memory 432, such as Windows ServerTM, Mac OS XTM, UnixTM, LinuxTM, FreeBSDTM, or the like.

In the exemplary embodiments, there is also provided a non-transitory computer readable storage medium including instructions, such as the memory 432, executable by the processing component 422 in the apparatus 400, for implementing the above methods. For example, the non-transitory computer-readable storage medium may be a ROM, a RAM, a CD-ROM, a magnetic tape, a floppy disc, and an optical data storage device.

It is further understood that the term "multiple" in the disclosure refers to two or more, which is the similar for other quantifiers. The term "and/or" describes a relation of associated objects, which indicates three relations, for example, "A and/or B" indicates that A exists alone, A and B both exist, and B exists alone. The character "/" generally indicates that the associated objects prior to and after the character "/" is an "or" relation. The terms "a", "said" and "the" in the singular form are also intended to include the plural form, unless the context clearly indicates otherwise.

It is further understood that the terms "first", "second", etc. are used to describe various types of information, but that such information should not be limited to these terms. These terms are used only to distinguish information of the same type from each other and do not indicate a particular order or degree of importance. In fact, the expressions "first" and "second" can be used interchangeably. For example, without departing from the scope of this disclosure, first information may also be referred to as second information, and similarly, second information may also be referred to as first information.

It is further understood that although the operations are depicted in the accompanying drawings in a particular order in the embodiments of the disclosure, it should not be construed as requiring that the operations are performed in the particular sequence shown or in a serial sequence, or that all of the operations shown be performed to obtain the desired results. Multitasking and parallel processing may be advantageous in particular environments.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for configuring a transmission configuration indication (TCI) state, comprising:
obtaining TCI state configuration information, wherein the TCI state configuration information comprises cell type indication information, the cell type indication information indicates a cell type corresponding to the TCI state configured by the TCI state configuration information, and the cell type comprises a serving cell or a neighboring cell; and
determining a cell corresponding to the TCI state configured by the TCI state configuration information based on the TCI state configuration information.

2. The method of claim 1, wherein the cell type indication information is represented by a flag bit.

3. The method of claim 2, wherein the TCI state configuration information further comprises at least one of a TCI state identification (ID), a serving cell index, or a reference signal ID.

4. The method of claim 3, wherein determining the cell corresponding to the TCI state configured by the TCI state configuration information based on the TCI state configuration information, comprises:
determining the cell corresponding to the TCI state configured by the TCI state configuration information based on a value of the flag bit.

5. The method of claim 4, wherein determining the cell corresponding to the TCI state configured by the TCI state configuration information based on the value of the flag bit, comprises:
in response to the value of the flag bit being a flag bit value for identifying a serving cell, determining the cell corresponding to the TCI state configured by the TCI state configuration information as the serving cell.

6. The method of claim 4, wherein determining the cell corresponding to the TCI state configured by the TCI state configuration information based on the value of the flag bit, comprises:
in response to the value of the flag bit being a flag bit value for identifying a neighboring cell, determining the cell corresponding to the TCI state configured by the TCI state configuration information as the neighboring cell.

7. The method of claim 6, further comprising:
in response to the flag bit value for identifying the neighboring cell comprising a plurality of flag bit values, determining the neighboring cell corresponding to the TCI state configured by the TCI state configuration information from a plurality of neighboring cells identified by the plurality of flag bit values.

8. The method of claim 7, wherein determining the neighboring cell corresponding to the TCI state configured by the TCI state configuration information from the plurality of neighboring cells identified by the plurality of flag bit values, comprises:
determining a neighboring cell physical cell identifier (PCI) based on the serving cell index included in the TCI state configuration information; and
determining a cell identified by the neighboring cell PCI as the neighboring cell corresponding to the TCI state configured by the TCI state configuration information.

9. The method of claim 8, wherein determining the neighboring cell PCI based on the serving cell index included in the TCI state configuration information, comprises:
determining the neighboring cell PCI corresponding to the serving cell index included in the TCI state configuration information based on a correspondence between the serving cell index and the neighboring cell PCI.

10. The method of claim 8, wherein determining the neighboring cell PCI based on the serving cell index included in the TCI state configuration information, comprises:
determining a component carrier in which a serving cell corresponding to the serving cell index is located, and determining the neighboring cell PCI corresponding to the component carrier.

11. The method of any one of claims 8-10, wherein in response to configuring up to one neighboring cell on the component carrier, the serving cell index and the neighboring cell PCI are in a one-to-one correspondence, and/or the component carrier and the neighboring cell PCI are in a one-to-one correspondence.

12. The method of any one of claims 8-10, wherein in response to configuring a plurality of neighboring cells on the component carrier, the serving cell index and the neighboring cell PCI are in a one-to-many correspondence, and/or the component carrier and the neighboring cell PCI are in a one-to-many correspondence.

13. The method of claim 12, wherein the neighboring cell corresponding to the TCI state configured by the TCI state configuration information is a neighboring cell identified by the flag bit value.

14. A method for configuring a transmission configuration indication (TCI) state, comprising:
sending TCI state configuration information, wherein the TCI state configuration information comprises cell type indication information, the cell type indication information indicates a cell type corresponding to the TCI state configured by the TCI state configuration information, and the cell type comprises a serving cell or a neighboring cell.

15. The method of claim 14, wherein the cell type indication information is represented by a flag bit.

16. The method of claim 15, wherein the TCI state configuration information further comprises at least one of a TCI state identification (ID), a serving cell index, or a reference signal ID.

17. The method of claim 16, wherein a value of the flag bit comprises a flag bit value for indicating a serving cell, or a flag bit value for indicating a neighboring cell.

18. The method of claim 17, wherein the flag bit value for indicating the neighboring cell comprises a plurality of flag bit values.

19. The method of any one of claims 15-18, wherein in response to configuring up to one neighboring cell on a component carrier, the serving cell index and a neighboring cell physical cell identifier (PCI) are in a one-to-one correspondence, and/or the component carrier and the neighboring cell PCI are in a one-to-one correspondence.

20. The method of any one of claims 15-18, wherein in response to configuring a plurality of neighboring cells on a component carrier, the serving cell index and a neighboring cell physical cell identifier (PCI) are in a one-to-many correspondence, and/or the component carrier and the neighboring cell PCI are in a one-to-many correspondence.

21. The method of claim 20, wherein a neighboring cell corresponding to the TCI state configured by the TCI state configuration information is a neighboring cell identified by the flag bit value.

22. An apparatus for configuring a transmission configuration indication (TCI) state, comprising:
a receiving unit, configured to obtain TCI state configuration information, wherein the TCI state configuration information comprises cell type indication information, the cell type indication information indicates a cell type corresponding to the TCI state configured by the TCI state configuration information, and the cell type comprises a serving cell or a neighboring cell; and
a processing unit, configured to determine a cell corresponding to the TCI state configured by the TCI state configuration information based on the TCI state configuration information.

23. An apparatus for configuring a transmission configuration indication (TCI) state, comprising:
a sending unit, configured to send TCI state configuration information, wherein the TCI state configuration information comprises cell type indication information, the cell type indication information indicates a cell type corresponding to the TCI state configured by the TCI state configuration information, and the cell type comprises a serving cell or a neighboring cell.

24. An apparatus for configuring a transmission configuration indication (TCI) state, comprising:
a processor;
a memory for storing instructions executable by the processor; wherein
the processor is configured to implement the method for configuring a TCI state of any one of claims 1 to 13, or the method for configuring a TCI state of any one of claims 14-21.

25. A storage medium having instructions stored thereon, wherein when the instructions are executed by a processor of a terminal, the terminal is caused to implement the method for configuring a TCI state of any one of claims 1 to 13, or when the instructions are executed by a processor of a network device, the network device is caused to implement the method for configuring a TCI state of any one of claims 14-21.
